# EUROPEAN PATENT SPECIFICATION

(11) **EP 4 623 771 B1**
(45) Date of publication and mention of the grant of the patent: **05.08.2026**
(21) Application number: 24222529.0
(22) Date of filing: 20.12.2024
(51) Int. Cl.: A47J 37/06

(54) **FRYING RECEPTACLE AND AIR FRYER**
FRITIERBEHÄLTER UND LUFTFRITEUSE
RÉCIPIENT DE FRITURE ET FRITEUSE À AIR

(30) Priority: 25.03.2024 CN 202410340110
(43) Date of publication of application: 01.10.2025
(73) Proprietor: Shenzhen Chenbei Technology Co., Ltd., Shenzhen, Guangdong 518051 (CN)
(72) Inventor: WU, Haitie, Shenzhen, 518051 (CN)
(74) Representative: Haseltine Lake Kempner LLP

(56) References cited:
- WO-A1-2022/191873
- CN-U- 215 226 906
- US-A1- 2022 386 809
- US-B1- 11 045 046

## Description

### Technical Field

The present application relates to the technical field of kitchen appliances and in particular to frying receptacles and air fryers.

### Background Art

With the increasing rise of the standard of living, more and more electric kitchen appliances have become part of people's lives. One of the newer types of electric kitchen appliances is the air fryer.

The air fryer mainly uses a built-in heating tube to heat the air around it. Then, under the action of a fan near the heating tube, the hot air is forced to form convection, which acts on the food surface in the air fryer body, allowing the food to be cooked thoroughly. At the same time, the hot air also takes away the moisture from the food surface, thereby forming a crispy surface similar to that of fried ones.

In the relevant prior art, the frying receptacle of the air fryer is prone to producing greasy fumes, which affects the taste of the cooked food, thereby affecting the user experience.

Reference may be made to US 2022/0386809 A1 and CN 215 226 906 U which each relate to a multiform basket for air fryer and air fryer having multiple use forms.

### Summary of the Invention

According to the present invention, a frying receptacle according to claim 1 is provided.

In one embodiment, the second portion of the grease groove is located around the crisper plates.

In one embodiment, the first portion and the second portion are interconnected.

In one embodiment, the side wall or bottom wall of the holding chamber is configured with a stop assembly, which is used for abutting against the partition so as to restrict horizontal movement of the partition.

In one embodiment, the stop assembly comprises two stop bumps spaced apart. In one embodiment, at least a portion of the stop assembly abuts against the crisper plates so as to restrict horizontal movement of the crisper plates.

In one embodiment, the stop assembly is located below the crisper plates.

In one embodiment, the stop assembly is formed by stamping.

In one embodiment, the side wall of the holding chamber is configured with a first snap-fit assembly, and the crisper plates each are provided with a second snap-fit assembly that snaps fit with the first snap-fit assembly.

In one embodiment, one of either the first snap-fit assembly or the second snap-fit assembly is configured with a first snap-fit connector, and the other is configured with a first snap-fit socket for mating with the first snap-fit connector.

In one embodiment, at least two first snap-fit assemblies are located at the end of the side wall of the holding chamber, and at least two first snap-fit assemblies are located at the middle of the side wall of the holding chamber.

According to the present invention, an air fryer according to claim 12 is provided.

In one embodiment, the air fryer comprises a heating element, and the vertical projection of the grease groove does not overlap with the vertical projection of the heating element.

In one embodiment, there are at least two heating elements, and the first portion of the grease groove is located below and between the adjacent heating elements.

Details of one or more embodiments of the present application are presented in the following drawings and description. Other features, purposes, and advantages of the present application will become understandable from the specification, the drawings, and the claims.

### Description of the drawings

In order to better describe and illustrate the embodiments and/or examples of the inventions disclosed herein, reference may be made to one or more of the drawings.
Fig. 1 is a schematic diagram of a frying receptacle provided in an embodiment of the present application.
Fig. 2 is a schematic diagram of the frying receptacle body in the frying receptacle shown in Fig. 1.
Fig. 3 is a schematic diagram of the frying receptacle shown in Fig. 1 in a tilted state.
Fig. 4 is a schematic diagram of a second snap-fit assembly in the frying receptacle shown in Fig. 1.
Fig. 5 is a schematic cross-sectional diagram of the frying receptacle shown in Fig. 1.
Fig. 6 is a partially enlarged view of area A in the frying receptacle shown in Fig. 5.
Fig. 7 is a schematic diagram of crisper plates for the frying receptacle shown in Fig. 1.
Fig. 8 is a partial cross-sectional view of the air fryer provided in an embodiment of the present application.
Fig. 9 is a cross-sectional view of the air fryer shown in Fig. 8 at another viewing angle.

Drawing reference numbers: 10-frying receptacle; 100-frying receptacle body; 110-holding chamber; 111-cooking chamber; 120-first snap-fit assembly; 121-first snap-fit connector; 130-stop assembly; 131-stop bump; 141-second snap-fit socket; 142-guide groove; 170-grease groove; 171-first portion; 172-second portion; 180-handle; 200-crisper plate; 210-second snap-fit assembly; 211-first snap-fit socket; 212-first snap-fit section; 213-second snap-fit section; 214-plug-in pin; 220-plug-in hole; 300-partition; 400-housing; 410-heating element.

### Specific Embodiments

The technical solutions in the embodiments of the present application will be described clearly and completely with reference to the drawings of the embodiments of the present application. It is apparent that the embodiments described are only some of the embodiments of the present application and do not constitute all embodiments.

In the descriptions of the present application, it should be understood that, if terms "center," "longitudinal," "transverse," "length," "width," "thickness," "upper," "lower," "front," "rear," "left," "right," "vertical," "horizontal," "top," "bottom," "inside," "outside," "clockwise," "anticlockwise," "axial," "radial," "circumferential," and the like appear, the orientation or positional relationship indicated by these terms will be based on the orientation or positional relationship shown in the drawings only for the convenience of describing the present application and simplifying description instead of indicating or implying that the device or element referred to must have a particular orientation or must be configured and operated at a particular orientation. Therefore, this cannot be construed as limiting the present application.

In addition, the terms "first" and "second" are used for descriptive purposes only, and these terms are not to be construed as indicating or implying relative importance or implicitly indicating the number of technical features indicated. As such, features defined as "first" and "second" may explicitly or implicitly include at least one of the features. In the description of the present application, if the term "a plurality of" appears, "a plurality of" means at least two, such as two, three, etc., unless otherwise specifically defined.

In the present application, unless otherwise expressly specified and limited, if the terms "mounted," "interconnected," "connected," "fixed," etc. appear, these terms should be understood in a broad sense. For example, they can be fixed connections, detachable connections, or integrated; they can be mechanical connections or electrical connections; they can be direct connection or indirect connection through intermediate media; and they can be the connection between two elements or the interaction between two elements, unless otherwise clearly defined. For those of ordinary skill in the art, the specific meaning of the above terms in the present application may be understood based on specific conditions.

In the present application, unless otherwise expressly specified and defined, if descriptions, such as a first feature being in the "upper" part or "lower" part of a second feature, etc., appear, the meaning may be that the first and second features are in direct contact or that the first and second features are in indirect contact through an intermediate medium. Furthermore, the first feature being "on," "above," and "on top of" the second feature may mean the first feature being directly above or obliquely above the second feature, or simply indicate the level of the first feature being higher than that of the second feature. The first feature being "under," "below," and "at the bottom of" the second feature may mean the first feature being directly below or obliquely below the second feature or simply indicate the level of the first feature being lower than that of the second feature.

It should be noted that if an element is referred to as being "fixed to" or "set up at" another element, it means that it may be directly on the other element, or in the middle of another element. If an element is considered to be "connected" to another element, it means it may be directly connected to another element or in the middle of another element at the same time. The terms "vertical," "horizontal," "upper," "lower," "left," "right," and similar expressions used in the present application (if any) are for illustrative purposes only and are not meant to be the only embodiment.

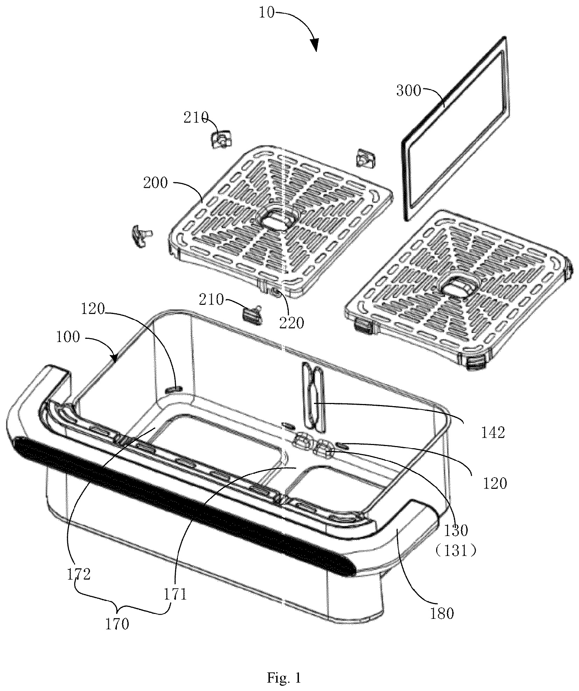

Referring to Figs. 1-2, the frying receptacle (10) provided in an embodiment of the present application for an air fryer comprises a frying receptacle body (100), at least two crisper plates (200), and at least one partition (300), with the frying receptacle body (100) configured with a holding chamber (110). The crisper plates (200) are detachably set up in the holding chamber (110). The partition (300) is detachably set up in the holding chamber (110), wherein a grease groove (170) is formed in the bottom wall of the holding chamber (110), and a first portion (171) of the grease groove (170) is located beneath the partition (300).

For the existing frying receptacle (10), as the heating element (410) is generally located in the center of the crisper plates (200), the central area of the crisper plates (200) is relatively close to the heating element (410), i.e., the central area has a relatively high temperature, making the accumulated grease in the central area susceptible to thermal decomposition, leading to emission of greasy fumes. By setting up a grease groove (170) beneath the partition (300) between the two crisper plates (200), the accumulated grease in the central area is guided to an edge area relatively far away from the heating element (410). The temperature of the edge area is relatively low, which makes it less likely to produce greasy fumes, resulting in reduction of the production of greasy fumes. As a result, the effect of greasy fumes on the taste of the cooked food and the health of the user is mitigated and the user experience is improved.

By mounting the partition (300), the user can divide the holding chamber (110) into at least two cooking chambers (111) so that the user can cook different foods in a plurality of cooking chambers (111) simultaneously or separately in one of the cooking chambers (111). After the partition (300) is removed, the two cooking chambers (111) can even be integrated into a large-capacity cooking chamber (111), enabling the cooking of large-volume foods. By setting up the partition (300), the user's needs under different scenarios can be easily met, thereby improving the user experience. Specifically, the partition (300) may be a hollow structure; with the hollow partition (300), the heating efficiency of the cooking chamber (111) can be improved by utilizing air for thermal insulation, while heat dissipation can be prevented.

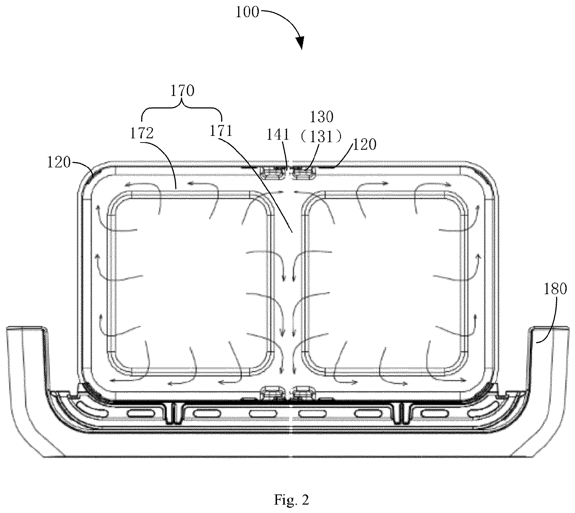

Referring to Figs. 1-2, in one embodiment, the second portion (172) of the grease groove (170) is located below the crisper plates (200) and around the crisper plates (200). As such, the accumulated grease in the central area of the holding chamber (110) can be guided to the area beneath the partition (300), and it can also be guided to the edge areas of the holding chamber (110). As the temperature of the edge area is relatively low, the production of greasy fumes can be reduced. Furthermore, the first portion (171) and the second portion (172) are interconnected with each other such that the whole grease groove (170) approximates a square equally divided into two rectangles. As shown in Fig. 2, the flow direction of accumulated grease is indicated by the arrows.

Referring to Fig. 1, Fig. 3, and Fig. 5, the holding chamber (110) wall is configured with a stop assembly (130), and the stop assembly (130) is used for abutting against the partition (300) so as to restrict the horizontal movement of the partition (300). For example, when the partition (300) is squeezed by the food, the setup of the stop assembly (130) can provide a certain support and effectively prevent the partition (300) from falling over.

As shown in Fig. 1, Fig. 5, and Fig. 7, specifically, the stop assembly (130) includes two stop bumps (131) spaced apart, and the gap between the two stop bumps (131) forms the second snap-fit socket (141). When the partition (300) is mounted in the holding chamber (110), the partition (300) snaps into the second snap-fit socket (141) so that the two stop bumps (131) can abut against the partition (300) and the second snap-fit socket (141) can keep the partition (300) fixed. For example, when the partition (300) is squeezed by the food, the setup of the stop bumps (131) and the second snap-fit socket (141) can provide a certain support and effectively prevent the partition (300) from falling over.

Furthermore, when the crisper plates (200) are mounted in the holding cavity (110), the crisper plates (200) can abut right against the stop bumps (131) such that the stop bumps (131) can restrict horizontal movement of the crisper plates (200). As such, by letting the stop assembly (130) abut against the crisper plates (200), the horizontal movement of the crisper plates (200) can be restricted, and by securing the crisper plates 200, the risk of the crisper plates (200) sliding out of the holding chamber (110), when the user pours the food, can be reduced. Furthermore, the stop bumps (131) are located below the crisper plates (200) so as to support and secure the crisper plates (200). The stop bumps (131) may be made by using the stamping process.

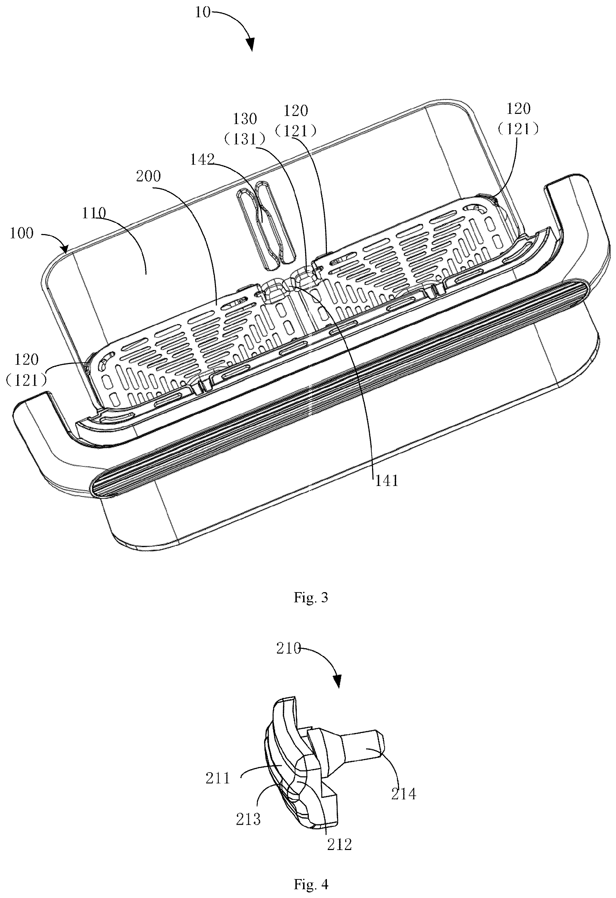

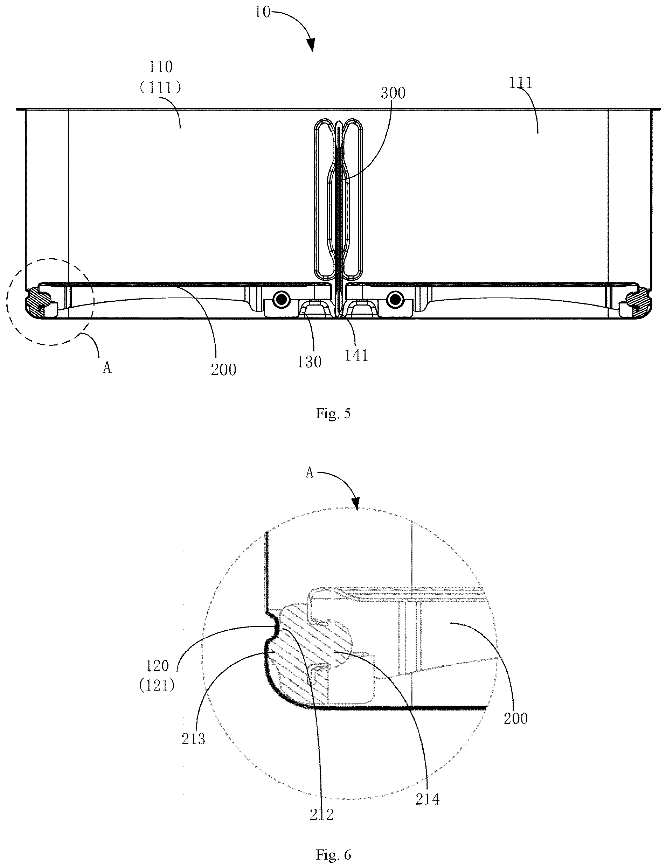

Referring to Fig. 3 and Fig. 5, in one embodiment, the side wall of the holding chamber (110) is configured with a guide groove (142). During the mounting of the partition (300), the partition (300) may slide along the guide groove (142) until it snaps into the second snap-fit socket (141). The guide groove (142) can guide the mounting of the partition (300), and the guide groove (142) can also play a role in securing the partition (300), thereby improving the reliability of the mounting of the partition (300) in the holding chamber (110). Specifically, the side wall of the holding chamber (110) is configured with two rib plates spaced apart, and the gap between the two rib plates forms the guide groove (142).

Referring to Fig. 1 and Figs. 3-6, in one embodiment, the side wall of the holding chamber (110) is configured with a first snap-fit assembly (120). The crisper plates (200) are provided with a second snap-fit assembly (210), and the second snap-fit assembly (210) can snap-fit with the first snap-fit assembly (120) so as to secure the crisper plates (200) in the holding chamber (110). By setting up a second snap-fit assembly (210) on the crisper plates (200) so as to snap-fit with the first snap-fit assembly (120) on the frying receptacle body (100), the crisper plates (200) are fixed in the holding chamber (110). As such, when a user pours the food, the possibility of the high-temperature crisper plates (200) coming out of the holding chamber (110) can be reduced, thereby reducing the risk of the high-temperature crisper plates (200) sliding out of the holding chamber (110) and scalding the user. This in turn improves the safety of using the air fryer, thereby improving the user experience. Specifically, the first snap-fit assembly (120) and second snap-fit assembly (210) may be made of a flexible material such as silicone. Through such a setup, when the crisper plates (200) are mounted in the holding chamber (110), the first snap-fit assembly (120) and second snap-fit assembly (210) may have adaptive elastic deformation, thereby facilitating the mounting of the crisper plates (200). At the same time, the risk of scratching the chamber coating, when the second snap-fit assembly (210) is in contact with the chamber wall of the holding chamber (110), can also be reduced.

Referring to Fig. 1 and Figs. 4-6, in one embodiment, one of either the first snap-fit assembly (120) or the second snap-fit assembly (210) is configured with a first snap-fit connector (121), and the other is configured with the first snap-fit socket (211) to snap fit with the first snap-fit connector (121). For example, the side wall of the holding chamber (110) is provided with a first snap-fit connector (121), and the side wall of the crisper plates (200) is provided with a first snap-fit socket (211), which provides a mating fit between the first snap-fit connector (121) and the first snap-fit socket (211) so that the crisper plates (200) are secured in the holding chamber (110). It can be understood that the setup positions of the first snap-fit connector (121) and the first snap-fit socket (211) can be interchanged. That is, the first snap-fit connector (121) is provided on the side wall of the crisper plates (200), and the first snap-fit socket (211) is provided on the side wall of the holding chamber (110).

Referring to Figs. 4-6, in one embodiment, the second snap-fit assembly (210) includes a first snap-fit section (212) and a second snap-fit section (213) set up from top to bottom. The first snap-fit section (212) is recessed in the horizontal direction relative to the second snap-fit section (213), and the recessed space forms a first snap-fit socket (211). Correspondingly, the first snap-fit assembly (120) is configured with a first snap-fit connector (121). When the crisper plates (200) are mounted in the holding chamber (110), the first snap-fit connector (121) overlaps above the second snap-fit section (213), and the first snap-fit connector (121) abuts against the slot wall of the first snap-fit socket (211). As such, when the user pours the food, the first catch snap-fit connector (121) restricts the crisper plates (200) from moving in a direction away from the holding chamber (110), thereby improving user safety.

Referring to Fig. 1 and Fig. 3, in one embodiment, along the circumferential direction of the holding chamber (110), the first snap-fit assembly (120) and second snap-fit assembly (210) include a plurality of sets, with at least two first snap-fit assemblies (120) being located at the ends of the side wall of the holding chamber (110) and with at least two first snap-fit assemblies (120) being located at the middle of the side wall of the holding chamber (110). It can be understood that the position and number of the first snap-fit assemblies (120) are compatible with the position and number of the second snap-fit assemblies (210), and both the front and rear side walls of the holding chamber (110) are provided with the first snap-fit assemblies (120). Through the snap-fit of a plurality of sets of first snap-fit assemblies (120) and a plurality of sets of second snap-fit assemblies (210), the reliability of securing the crisper plates (200) is further improved.

As shown in Fig. 1 and Fig. 3, when more than two crisper plates (200) may be placed in the holding chamber (110), the second snap-fit assembly (210) may be set up along the circumferential direction of the crisper plates (200). For example, one set of the second snap-fit assemblies (210) is located at the corner position of the crisper plates (200), and the other set of second snap-fit assemblies (210) is located at the end of the crisper plates (200), i.e., it is set up near the corner position. By setting up one set of second snap-fit assemblies (210) at the ends and not all of them at the corner positions, when the two crisper plates (200) are placed side-by-side, the possibility of interference of the second snap-fit assemblies (210) of the two crisper plates (200) can be reduced, thus maximizing the use of the cooking space of the holding chamber (110).

Referring to Fig. 1 and Fig. 6, in one embodiment, one of either the crisper plates (200) or the second snap-fit assembly (210) is configured with a plug-in pin (214), and the other is configured with a plug-in hole (220) for mating with the plug-in pin (214). For example, in the present embodiment, a plug-in hole (220) is configured on the crisper plates (200), and a plug-in pin (214) is configured on the second snap-fit assembly (210) , and the second snap-fit assembly (210) is fixed on the crisper plates (200) through the mating of the plug-in pin (214) and the plug-in hole (220). It can be understood that the setup positions of the plug-in pin (214) and the plug-in hole (220) can be interchanged. That is, the plug-in pin (214) is provided on the crisper plates (200), and the plug-in hole (220) is provided on the second snap-fit assembly (210).

As shown in Fig. 1, a handle (180) is also set up on the frying receptacle (10), and the setup of the handle (180) is to facilitate movement of the frying receptacle (10) by the user. In addition, the handle (180) can also function to a certain extent to prevent scalding.

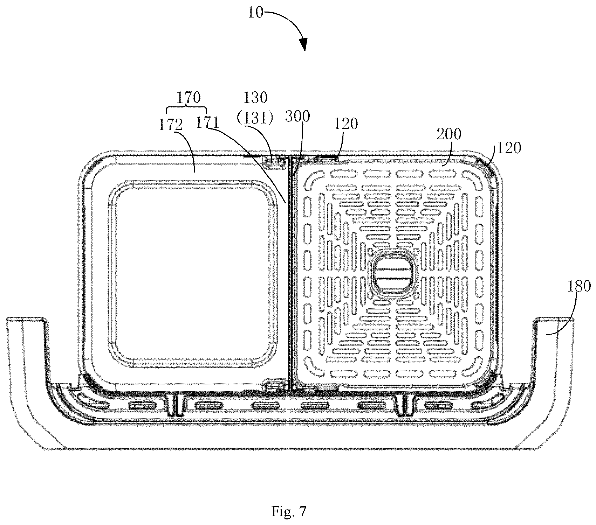

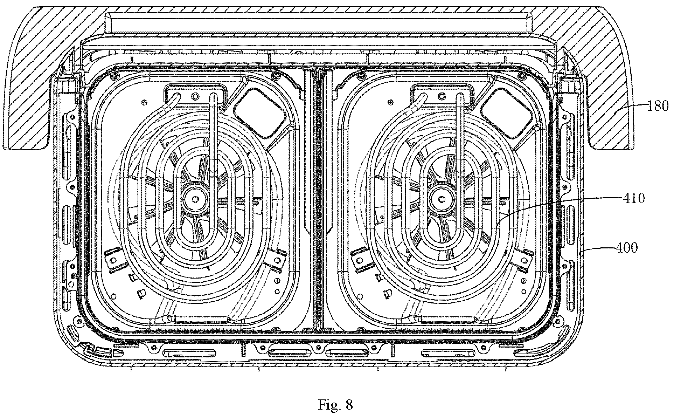

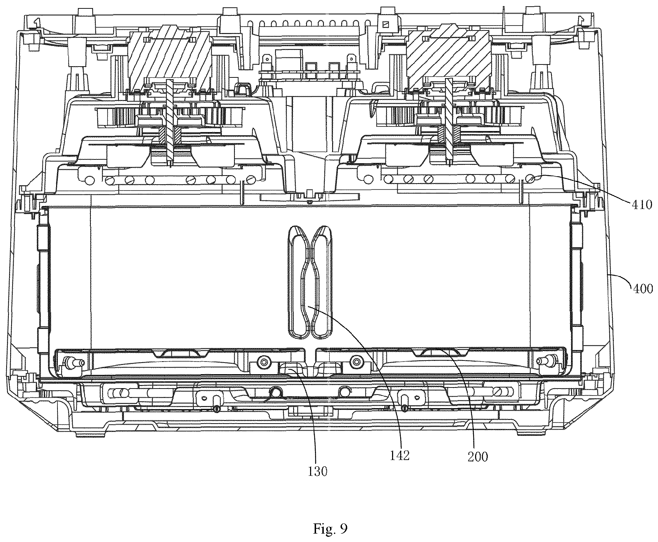

Furthermore, as shown in Figs. 7-9, an embodiment of the present application also provides an air fryer, comprising a housing (400) and a frying receptacle (10) of any of the aforementioned embodiments that is detachably connected to the housing (400).

It can be understood that the air fryer also comprises a heating element (410). As the heating element (410) is generally located in the center of the crisper plates (200), the central area of the crisper plates (200) is relatively close to the heating element (410), i.e., the temperature of the central area is relatively high, making the accumulated grease in the central area susceptible to thermal decomposition, leading to emission of greasy fumes. By setting up a grease groove (170) beneath the partition (300) between the two crisper plates (200), the accumulated grease in the central area is guided to an edge area relatively far away from the heating element (410). The temperature of the edge area is relatively low, which makes it less likely to produce greasy fumes, resulting in reduction of the production of greasy fumes. As a result, the effect of greasy fumes on the taste of the cooked food and the health of the user is mitigated and the user experience is improved.

As shown in Figs. 7-9, in some embodiments, the heating element (410) may be located above the crisper plates (200) or below the crisper plates (200), wherein the vertical projection of the grease groove (170), that is, the projection on the horizontal plane, does not overlap with the vertical projection of the heating element (410). That is, the location of the grease groove (170) is relatively far from the heating element (410), which makes it less likely to produce greasy fumes at this spot, resulting in reduction of the production of greasy fumes. As a result, the effect of greasy fumes on the taste of the cooked food and the health of the user is mitigated and the user experience is improved.

Furthermore, as shown in Figs. 7-9, there are at least two heating elements (410), with the first portion (171) of the grease groove (170) located below and between two adjacent heating elements (410) and the second portion (172) of the grease groove (170) located on the outer side of the heating elements (410). It is apparent that the grease groove (170) is relatively far away from the heating elements (410), which makes it less likely to produce greasy fumes, resulting in reduction of the production of greasy fumes. As a result, the effect of greasy fumes on the taste of the cooked food and the health of the user is mitigated and the user experience is improved.

In some embodiments, the air fryer further comprises a fan assembly, and it is understood that a space is provided in the housing to mount the fan assembly and the heating elements. The frying receptacle is mounted on the housing and is d designed to be separated from the housing for holding food ingredients and forming a cooking space. The heating element is used to heat the air, and the fan assembly is used to send the heated air into the frying receptacle so as to heat the food ingredients in the frying receptacle. Furthermore, the fan assembly includes a motor, and the motor is a bidirectional motor. The hot air flows in a preset direction when the motor is rotated in a first direction, and the hot air flows in a reverse direction when the motor is rotated in another direction. The forward and reverse rotations of the motor can change the direction of the air in the frying receptacle, allowing the air to heat the food ingredients from both sides. In the actual process, the operation mode of the motor can be properly set so that the motor turns alternatively in forward and reverse directions so as to ensure the food ingredients are heated evenly and taste good.

Furthermore, the fan assembly is a cross-flow fan, and the outside of the cross-flow fan is provided with a turbine casing. When the motor rotates in both directions through the cooperation between the cross-flow fan and the turbine casing, sufficient air flow can be ensured. Furthermore, the turbine casing is provided with a turbine tongue that can further optimize the air duct of the turbine casing, allowing the air flow guiding efficiency of the turbine casing to be improved.

Furthermore, the inside of one end of the turbine housing connected to the frying receptacle is provided with a flow deflector plate. The flow deflector plate can further guide the air when air exits from the lower part of it and returns from the middle-to-upper part of it so that the air can quickly return to the turbine housing along a preset trajectory before the next cycle starts. In addition, the presence of the flow deflector plate can separate the inlet of the turbine housing into two passages in the up-down direction, wherein the upper passage is for returning of the air near the top of the frying receptacle, while the lower passage is for returning of the air from the lower half of the frying receptacle. Especially when the inlet channel of the frying receptacle is on the other side of the turbine housing, the flow deflector plate allows the air to flow back from the lower channel before it flows to the top. Specifically, due to the presence of the lower channel, the air from the side of the frying receptacle being away from the turbine housing may be tilted toward the turbine housing under the action of the lower channel before flowing back from the lower channel instead of directly flowing to the top of the frying receptacle under the action of inertia. This is to regulate the flow route of hot air in the frying receptacle, thereby, on the one hand increasing the air circulation efficiency, and on the other hand, allowing more hot air to flow through the surface of the food ingredients on the side of the turbine housing to heat up the ingredients, thus overcoming the problem with insufficient heating of food ingredients on the side of the turbine housing. When it comes to a specific design, a connection can be set up between the turbine housing the frying receptacle so that the air can quickly flow back from the lower channel after flowing through the food ingredients, thereby reducing air flow to the top of the cooking chamber.

The various technical features of the above described embodiments may be combined in any manner within the scope of the present invention defined by the appended claims. For brevity of description, not all possible combinations of the various technical features in the above described embodiments are described. However, as long as there is no contradiction between the combinations of these technical features, they should be considered as being within the scope of the present invention, said scope being defined by the appended claims.

The above described embodiments only represent several embodiments of the present application, with the relatively specific and detailed descriptions, but they cannot be understood as a limitation on the scope of the patent application, said scope being defined by the appended claims. It should be noted that for those of ordinary skill in the art, several variations and improvements may be made without departing from the scope of protection of the present application. The scope of protection of the present application is defined by the appended claims.

## Claims

1. A frying receptacle for an air fryer, wherein the frying receptacle comprises:
a frying receptacle body (100), with the frying receptacle body (100) being configured with a holding chamber (110);
at least two crisper plates (200), with the crisper plates (200) being detachably set up in the holding chamber (110);
at least one partition (300), with the partition (300) being detachably set up between two adjacent crisper plates;
**characterized in that** a grease groove (170) is configured on a bottom wall of the holding chamber (110), wherein a first portion (171) of the grease groove (170) is located beneath the partition (300).

2. The frying receptacle according to claim 1, wherein a second portion (172) of the grease groove (170) is located below the crisper plates (200) and around the crisper plates (200).

3. The frying receptacle according to claim 2, wherein the first portion (171) and the second portion (172) are interconnected.

4. The frying receptacle according to claim 1, wherein a side wall or the bottom wall of the holding chamber (110) is configured with a stop assembly (130), and the stop assembly (130) abuts against the partition (300) to restrict horizontal movement of the partition (300).

5. The frying receptacle according to claim 4, wherein the stop assembly (130) comprises two stop bumps (131) spaced apart.

6. The frying receptacle according to claim 4, wherein at least a portion of the stop assembly (130) abuts against the crisper plates (200) to restrict horizontal movement of the crisper plates (200).

7. The frying receptacle according to claim 4, wherein the stop assembly (130) is located below the crisper plates (200).

8. The frying receptacle according to claim 4, wherein the stop assembly (130) is formed by stamping.

9. The frying receptacle according to claim 1, wherein a side wall of the holding chamber (110) is configured with a first snap-fit assembly (120), and the crisper plates (200) mating each are provided with a second snap-fit assembly (210) that snaps fit with the first snap-fit assembly (120).

10. The frying receptacle according to claim 9, wherein one of the first snap-fit assembly (120) or the second snap-fit assembly (210) is configured with a first snap-fit connector (121), and the other is configured with a first snap-fit socket (211) mating with the first snap-fit connector (121).

11. The frying receptacle according to claim 9, wherein at least two first snap-fit assemblies (120) are located at ends of the side wall of the holding chamber (110), and at least two first snap-fit assemblies (120) are located at the middle of the side wall of the holding chamber (110).

12. An air fryer, comprising a housing (400) and the frying receptacle (10) according to any of claims 1 to 11, wherein the frying receptacle (10) is detachably connected to the housing (400).

13. The air fryer according to claim 12, wherein the air fryer comprises a heating element (410), and a vertical projection of the grease groove (170) does not overlap with a vertical projection of the heating element (410).

14. The air fryer according to claim 13, wherein there are least two heating elements (410), and the first portion of the grease groove (170) is located below and between adjacent heating elements (410).

## Patentansprüche

1. Frittieraufnahme für eine Heißluftfritteuse, wobei die Frittieraufnahme umfasst:
einen Frittieraufnahmekörper (100), wobei der Frittieraufnahmekörper (100) mit einer Haltekammer (110) ausgelegt ist;
mindestens zwei Knusperplatten (200), wobei die Knusperplatten (200) lösbar in der Haltekammer (110) angeordnet sind;
mindestens eine Trennwand (300), wobei die Trennwand (300) lösbar zwischen zwei benachbarten Knusperplatten angeordnet ist;
**dadurch gekennzeichnet, dass** eine Fettrinne (170) an einer Bodenwand der Haltekammer (110) ausgelegt ist, wobei ein erster Abschnitt (171) der Fettrinne (170) sich unterhalb der Trennwand (300) befindet.

2. Frittieraufnahme nach Anspruch 1, wobei ein zweiter Abschnitt (172) der Fettrinne (170) sich unterhalb der Knusperplatten (200) und um die Knusperplatten (200) herum befindet.

3. Frittieraufnahme nach Anspruch 2, wobei der erste Abschnitt (171) und der zweite Abschnitt (172) miteinander verbunden sind.

4. Frittieraufnahme nach Anspruch 1, wobei eine Seitenwand oder die Bodenwand der Haltekammer (110) mit einer Anschlagbaugruppe (130) ausgelegt ist und die Anschlagbaugruppe (130) gegen die Trennwand (300) anliegt, um eine Horizontalbewegung der Trennwand (300) einzuschränken.

5. Frittieraufnahme nach Anspruch 4, wobei die Anschlagbaugruppe (130) zwei beabstandete Anschlagnocken (131) umfasst.

6. Frittieraufnahme nach Anspruch 4, wobei mindestens ein Abschnitt der Anschlagbaugruppe (130) gegen die Knusperplatten (200) anliegt, um eine Horizontalbewegung der Knusperplatten (200) einzuschränken.

7. Frittieraufnahme nach Anspruch 4, wobei die Anschlagbaugruppe (130) sich unterhalb der Knusperplatten (200) befindet.

8. Frittieraufnahme nach Anspruch 4, wobei die Anschlagbaugruppe (130) durch Stanzen gebildet ist.

9. Frittieraufnahme nach Anspruch 1, wobei eine Seitenwand der Haltekammer (110) mit einer ersten Rastbaugruppe (120) ausgelegt ist und die Knusperplatten (200) passend jeweils mit einer zweiten Rastbaugruppe (210) bereitgestellt sind, die mit der ersten Rastbaugruppe (120) einrastet.

10. Frittieraufnahme nach Anspruch 9, wobei eines von der ersten Rastbaugruppe (120) oder der zweiten Rastbaugruppe (210) mit einem ersten Rastverbinder (121) ausgelegt ist und das andere mit einer ersten Rastaufnahme (211) ausgelegt ist, die passend mit dem ersten Rastverbinder (121) ist.

11. Frittieraufnahme nach Anspruch 9, wobei mindestens zwei erste Rastbaugruppen (120) sich an Enden der Seitenwand der Haltekammer (110) befinden und mindestens zwei erste Rastbaugruppen (120) sich in der Mitte der Seitenwand der Haltekammer (110) befinden.

12. Heißluftfritteuse, umfassend ein Gehäuse (400) und die Frittieraufnahme (10) nach einem der Ansprüche 1 bis 11, wobei die Frittieraufnahme (10) lösbar mit dem Gehäuse (400) verbunden ist.

13. Heißluftfritteuse nach Anspruch 12, wobei die Heißluftfritteuse ein Heizelement (410) umfasst und eine Vertikalprojektion der Fettrinne (170) nicht mit einer Vertikalprojektion des Heizelements (410) überlappt.

14. Heißluftfritteuse nach Anspruch 13, wobei mindestens zwei Heizelemente (410) vorhanden sind und der erste Abschnitt der Fettrinne (170) sich unterhalb und zwischen benachbarten Heizelementen (410) befindet.

## Revendications

1. Récipient de friture pour friteuse à air chaud, dans lequel le récipient de friture comprend :
un corps (100) de récipient de friture, le corps (100) de récipient de friture étant configuré avec une chambre de maintien (110) ;
au moins deux plaques de cuisson croustillante (200), les plaques de cuisson croustillante (200) étant mises en place de manière amovible dans la chambre de maintien (110) ;
au moins une cloison (300), la cloison (300) étant mise en place de manière amovible entre deux plaques de cuisson croustillante adjacentes ;
**caractérisé en ce qu'**une rainure à graisse (170) est configurée sur une paroi de fond de la chambre de maintien (110), dans lequel une première partie (171) de la rainure à graisse (170) est située au-dessous de la cloison (300).

2. Récipient de friture selon la revendication 1, dans lequel une seconde partie (172) de la rainure à graisse (170) est située sous les plaques de cuisson croustillante (200) et autour des plaques de cuisson croustillante (200).

3. Récipient de friture selon la revendication 2, dans lequel la première partie (171) et la seconde partie (172) sont interconnectées.

4. Récipient de friture selon la revendication 1, dans lequel une paroi latérale ou la paroi de fond de la chambre de maintien (110) est configurée avec un ensemble d'arrêt (130), et l'ensemble d'arrêt (130) vient en butée contre la cloison (300) pour limiter un mouvement horizontal de la cloison (300).

5. Récipient de friture selon la revendication 4, dans lequel l'ensemble d'arrêt (130) comprend deux butées d'arrêt (131) espacées.

6. Récipient de friture selon la revendication 4, dans lequel au moins une partie de l'ensemble d'arrêt (130) vient en butée contre les plaques de cuisson croustillante (200) pour limiter un mouvement horizontal des plaques de cuisson croustillante (200).

7. Récipient de friture selon la revendication 4, dans lequel l'ensemble d'arrêt (130) est situé sous les plaques de cuisson croustillante (200).

8. Récipient de friture selon la revendication 4, dans lequel l'ensemble d'arrêt (130) est formé par estampage.

9. Récipient de friture selon la revendication 1, dans lequel une paroi latérale de la chambre de maintien (110) est configurée avec un premier ensemble à encliquetage (120), et les plaques de cuisson croustillante (200) s'accouplant chacune sont munies d'un second ensemble à encliquetage (210) qui vient s'encliqueter avec le premier ensemble à encliquetage (120).

10. Récipient de friture selon la revendication 9, dans lequel l'un du premier ensemble à encliquetage (120) ou du second ensemble à encliquetage (210) est configuré avec un premier connecteur à encliquetage (121), et l'autre est configuré avec une première prise à encliquetage (211) s'accouplant avec le premier connecteur à encliquetage (121).

11. Récipient de friture selon la revendication 9, dans lequel au moins deux premiers ensembles à encliquetage (120) sont situés au niveau d'extrémités de la paroi latérale de la chambre de maintien (110), et au moins deux premiers ensembles à encliquetage (120) sont situés au niveau du milieu de la paroi latérale de la chambre de maintien (110).

12. Friteuse à air chaud, comprenant un boîtier (400) et le récipient de friture (10) selon l'une quelconque des revendications 1 à 11, dans laquelle le récipient de friture (10) est relié de manière amovible au boîtier (400).

13. Friteuse à air chaud selon la revendication 12, dans laquelle la friteuse à air chaud comprend un élément chauffant (410), et une projection verticale de la rainure à graisse (170) ne chevauche pas une projection verticale de l'élément chauffant (410).

14. Friteuse à air chaud selon la revendication 13, dans laquelle il y a au moins deux éléments chauffants (410), et la première partie de la rainure à graisse (170) est située en dessous et entre les éléments chauffants (410) adjacents.
